# DEMANDE DE BREVET EUROPEEN

(11) **EP 1 494 445 A1**
(43) Date de publication de la demande: **05.01.2005**
(21) Numéro de dépôt: 04103150.1
(22) Date de dépôt: 02.07.2004
(51) Int. Cl.: H04M 17/02, H04M 15/30

(54) **Procédé de routage d'appels d'un appareil de service vers un serveur de gestion**

(30) Priorité: 03.07.2003 FR 0308149
(71) Demandeur: Schlumberger Systèmes, 92120 Montrouge (FR)
(72) Inventeur: Grunenwald, Rodolphe, 94340, Joinville-le-Pont (FR); Lefevre, Eric, 92320, Chatillon (FR)
(74) Mandataire: Weihs, Bruno

(57) **Abrégé**

Procédé de routage des appels d'au moins un appareil (10), du type délivrant des biens et des services tel qu'un téléphone public, relié à au moins un dispositif serveur de gestion (20) via au moins un dispositif mandataire (5) à travers un réseau de communication (2), ledit procédé de routage étant mis en oeuvre au sein du dispositif mandataire (5), caractérisé en ce qu'il comprend les étapes suivantes :
- réception par le serveur mandataire d'une demande de connexion d'un appareil, ladite demande comportant des données d'identification dudit appareil, tels qu'un certificat ESN et un numéro d'appel dans le cas d'un téléphone public ;
- contrôle des données d'identification de l'appareil et en cas d'identification réussie dudit appareil, vérification dans une table de routage, de l'existence d'un serveur de gestion (20) associé audit appareil (10) ;
- si la table de routage indique un serveur de gestion associé audit appareil (10) alors le dispositif mandataire (5) opère le transfert de l'appel vers ledit serveur de gestion (20);
- et si la table ne comporte aucun serveur de gestion associé audit appareil (10) alors ledit dispositif mandataire affecte audit appareil (10) un serveur de gestion (20), transfère l'appel vers ledit serveur de gestion et met à jour la table de routage.

## Description

### Domaine technique

La présente invention se rapporte au routage des appels émanant d'un parc d'appareils à destination de différents serveurs de gestion à travers un réseau de télécommunication et ce, grâce à un serveur mandataire approprié.

Elle trouve une application générale dans la répartition et/ou routage d'appels de supervision émanant d'appareils délivrant des biens ou des services, et plus particulièrement de téléphones publics.

### Technique antÃ©rieure

D'une manière générale, un parc d'appareils délivrant des biens ou des services, comme par exemple des téléphones publics, se compose d'appareils répartis en nombre plus ou moins important sur un territoire donné.

Les téléphones publics sont connectés à un réseau de communication, constitué par exemple par le réseau téléphonique commuté PSTN ( acronyme anglo-saxon pour Public Switching Telephone Network) avec lequel ils communiquent chacun au moyen d'un modem.

Ces téléphones publics sont ainsi connectés via ledit réseau de télécommunication à un ou plusieurs ordinateurs centraux ou dispositifs formant serveurs de gestion, souvent appelés serveurs PMS (acronyme du terme anglo-saxon Payphone Management System), permettant au gestionnaire du parc de téléphones publics d'opérer leur supervision.

Un serveur PMS a pour fonction d'échanger avec les téléphones auxquels il est connecté, des informations relatives au fonctionnement de ces derniers.

En pratique, un serveur PMS a pour fonction d'opérer le téléchargement des mises à jour des programmes faisant fonctionner les circuits des téléphones publics, mises à jour corrigeant d'éventuelles erreurs détectées dans les programmes déjà en place ou bien encore introduisant de nouvelles prestations pour les usagers.

De plus, un serveur PMS a pour fonction de recevoir des rapports émanant de chaque téléphone, notamment des rapports d'alarme et des informations de facturation.

Pour éviter des doublons lors de l'initialisation des téléphones publics, un certificat unique, appelé encore ESN pour Electronic Serial Number, est envoyé du serveur PMS à destination de chaque téléphone public (et plus précisément de chaque carte électronique dite carte "mère" pilotant les communications avec le serveur PMS).

Ainsi, le certificat unique ESN combiné avec le numéro d'appel du téléphone public permet de garantir l'absence de doublon ou de duplicata dans les tables du serveur PMS, ce qui permet un traitement correct des rapports émanant de chaque terminal.

En pratique, l'opérateur d'un parc de téléphones publics exploite plusieurs serveurs PMS auxquels se connectent les téléphones publics via un dispositif formant serveur mandataire appelé encore serveur Medi@Proxy qui sert d'interface de communication entre les téléphones publics et les serveurs de gestion PMS.

En effet, un serveur PMS a des capacités de stockage forcément limitées et ne peut traiter qu'un nombre limité de téléphones publics car toutes les informations périodiquement transmises par les téléphones publics sont mémorisées sous forme de bases de données. Pour pallier ces limites physiques, d'autres serveurs PMS doivent donc être installés dès lors que le nombre d'appareils à superviser l'exige.

Grâce au serveur mandataire, l'ensemble des serveurs PMS est alors vu des téléphones publics comme une seule entité (une seule adresse IP destinataire) et ce, afin de favoriser la maintenance et l'installation (une seule adresse IP destinataire) des téléphones publics.

Le recours à plusieurs serveurs PMS se répartissant la supervision d'un parc de téléphones publics impose la connaissance par le serveur mandataire du serveur PMS associé à chaque téléphone public et donc la constitution d'une table de correspondance appropriée. Une telle table est particulièrement délicate à constituer et à faire vivre pour prendre en compte la vie du parc (ajout d'appareils, ré-allocation géographique, etc.)

### DÃ©couverte

La présente invention remédie à cet inconvénient en proposant un procédé approprié pour créer et mettre à jour automatiquement une telle table.

La présente invention porte sur un procédé de routage des appels d'au moins un appareil de service relié à au moins un dispositif serveur de gestion via au moins un dispositif mandataire à travers un réseau de communication, ledit procédé de routage étant mis en oeuvre au sein du dispositif mandataire.

Selon une définition générale de l'invention, le procédé de routage comprend les étapes suivantes :
- obtenir une table de routage entre une désignation d'un appareil e service, une adresse d'un dispositif serveur de gestion, un certificat unique associé audit appareil de service au serveur de gestion à partir de l'adresse dudit dispositif serveur de gestion ; et
- en réponse à une demande de connexion d'un appareil de services de désignation choisie, vérifier si la condition de routage est vraie et en cas de vérification positive, connecter l'appareil de service au serveur de gestion à partir de l'adresse dudit serveur de gestion sinon traiter la demande de connexion selon une politique d'affectation choisie.

Ainsi, grâce à la table de routage, le dispositif mandataire trouve correctement le serveur de gestion via le dispositif serveur mandataire.

En cas de vérification négative, la politique d'affectation prévoit de rechercher dans le réseau une adresse d'un dispositif de serveur de gestion apte à traiter la demande de connexion, et en cas de recherche positif à établir la connexion avec le dispositif serveur de gestion ainsi trouvé.

Dès que le serveur de gestion apte à traiter la demande de connexion est trouvé dans le réseau, la table de routage est mise à jour pour un usage ultérieur.

En cas de recherche négative, la politique d'affectation prévoit par exemple de délivrer un message à destination de l'appareil de service et/ou de mettre en place une procédure d'alerte.

Par exemple, dans la procédure d'alerte il est prévu d'établir une connexion entre l'appareil de service et un dispositif serveur de gestion spécifique attribué par défaut.

En variante, dans la procédure d'alerte, il est prévu d'établir une connexion entre l'appareil de service avec au moins un serveur de gestion appartenant à un groupe de serveurs de gestion prédéterminé.

Dans encore une autre variante, la procédure d'alerte consiste à refuser la demande de connexion.

La présente invention a également pour objet un dispositif de routage des appels de service apte à mettre en oeuvre le procédé mentionné ci-avant.

Selon une autre caractéristique de l'invention, le dispositif de routage comprend une table de routage entre une désignation d'un appareil de service, une adresse d'un dispositif serveur de gestion, un certificat unique associé audit appareil de service et au moins une condition de routage pour la connexion de l'appareil de service au serveur de gestion à partir de l'adresse dudit serveur de gestion, et des moyens de traitement aptes en réponse à une demande de connexion d'un appareil de service de désignation choisie, à vérifier si la condition de routage obtenue est vraie et en cas de vérification positive, à connecter l'appareil de service au serveur de gestion à partie de l'adresse dudit serveur contenue dans la table de routage, sinon à traiter la demande de connexion selon une politique d'affectation choisie.

Selon un autre aspect de l'invention, les moyens de traitement sont aptes à rechercher dans le réseau une adresse d'un dispositif serveur de gestion apte à traiter la demande de connexion et en cas de recherche positive à établir la connexion, ainsi qu'à mettre à jour automatiquement la table de correspondance avec les informations correspondantes.

La présente invention a également pour objet un dispositif mandataire comportant un dispositif de routage mentionné ci-avant.

En cas de recherche négative, la politique d'affectation prévoit par exemple de délivrer un message à destination de l'appareil de service et/ou de mettre en place une procédure d'alerte.

Par exemple, dans la procédure d'alerte il est prévu d'établir une connexion entre l'appareil de service et un dispositif serveur de gestion spécifique attribué par défaut.

En variante, dans la procédure d'alerte, il est prévu d'établir une connexion entre l'appareil de service avec au moins un serveur de gestion appartenant à un group de serveurs de gestion prédéterminé.

Dans encore une autre variante, la procédure d'alerte consiste à refuser la demande de connexion.

La présente invention a également pour objet un dispositif de routage des appels de service apte à mettre en oeuvre le procédé mentionné ci-avant.

Selon une caractéristique de l'invention, le dispositif de routage comprend une table de routage entre une désignation d'un appareil de service, une adresse d'un dispositif serveur de gestion, un certificat unique associé audit appareil de service et au moins une condition de routage pour la connexion de l'appareil de service au serveur de gestion à partie de l'adresse dudit serveur de gestion, et des moyens de traitement aptes en réponse à une demande de connexion d'un appareil de service de désignation choisie, à vérifier si la condition de routage obtenue est vraie et en cas de vérification positive, à connecter l'appareil de service au serveur de gestion à partir de l'adresse dudit serveur contenue dans la table de routage, sinon à traiter la demande de connexion selon une politique d'affectation choisie.

Selon un autre aspect de l'invention, les moyens de traitement sont aptes à rechercher dans le réseau une adresse d'un dispositif serveur de gestion apte à traiter la demande de connexion et en cas de recherche positive à établir la connexion, ainsi qu'à mettre à jour automatiquement la table de correspondance avec les informations correspondantes.

La présente invention a également pour objet un dispositif mandataire comportant un dispositif de routage mentionné ci-avant.

La présente invention a également pour objet un programme d'ordinateur stocké sur un support d'information , le programme comportant des instructions permettant la mise en oeuvre du procédé de routage mentionné ci-avant lorsque ce programme est chargé et exécuté par un système informatique.

Enfin, la présente invention a également pour objet un support d'information lisible par un système informatique, éventuellement ou totalement ou partiellement amovible, notamment CD-ROM ou support magnétique, tel qu'un disque dur ou une disquette, ou support transmissible, tel un signal électrique ou optique, le support d'information comportant des instructions d'un programme d'ordinateur permettant la mise en oeuvre du procédé de routage mentionné ci-avant lorsque ce programme est chargé et exécuté par un système informatique.

### Description des dessins

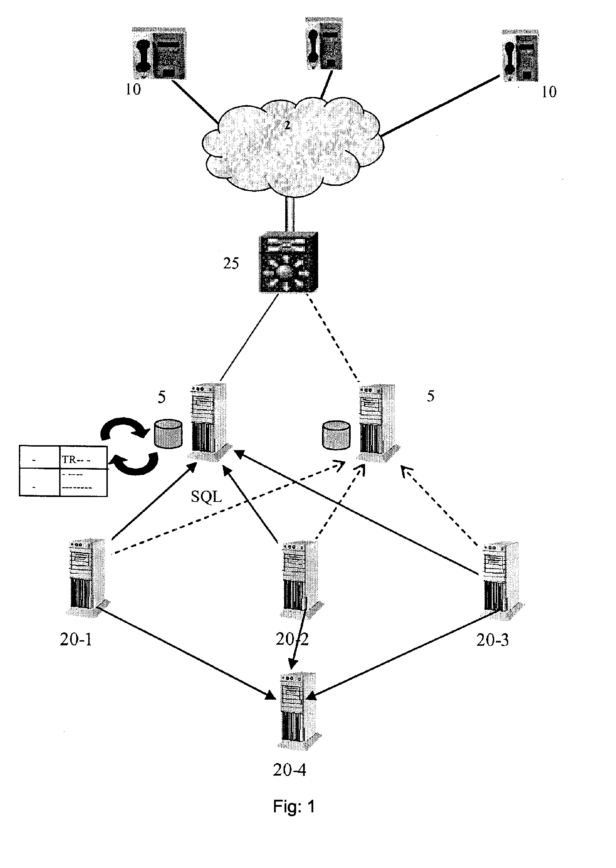

D'autres caractéristiques et avantages de l'invention apparaîtront à la lumière de la description détaillée ci-après et les dessins dans lesquels la figure 1 représente schématiquement une architecture d'un système de supervision d'un parc d'appareils selon l'invention ainsi que les actions du procédé de routage conformément aux différents cas de configuration selon l'invention.

### Mode pour l'invention

Sur la figue 1, la référence désigne un réseau1 de téléphonie public comprenant un parc de téléphones publics 10.

Les téléphones publics 10 sont destinés à être utilisées par les usagers en libre service et sont donc installés à cette fin dans des lieux publics, tels que les rues ou semi-publics tels que les centres commerciaux, les aéroports, halls d'hôtels, restaurants, magasins, etc.

Ces téléphones 10 permettent aux usagers d'effectuer des communications téléphoniques, en utilisant un réseau téléphonique approprié référencé 2.

Ce réseau téléphonique 2 est du type commuté analogique PSTN (Public Switching Telephone Network) ou du type ISDN (Integrated Service Digital Network).

Ce réseau téléphonique 2 peut également être constitué par un réseau de radiotéléphonie mobile et ce quelle que soit sa nature : GSM, CDMA, TDMA, AMTS, D-AMPS, GTRS, ou encore par le réseau Internet, et plus généralement par tous les réseaux de communication aptes à transmettre des données ainsi que par toutes combinaisons de tels réseaux.

Ces téléphones publics 10 sont adaptés pour communiquer avec plusieurs serveurs de gestion 20, appelés encore PMS, dédiés au fonctionnement et la gestion du réseau de téléphonie public 1. Les serveurs de gestion 20 sont individualisés en serveurs PMS 20-1, 20-2, 20-3, 20-4.

Un serveur PMS 20 a pour fonction d'échanger avec le parc de téléphones publics 10 des informations concernant leur fonctionnement et plus généralement le fonctionnement du système de téléphonie public.

En particulier, un serveur PMS 20 gère les sessions d'initialisation des téléphones publics et établit des données statistiques à partir des informations reçues des téléphones publics 10 (alarme, compteur d'exploitation).

Les téléphones publics 10 et les serveurs PMS 20 sont munis de moyens appropriés d'émission et de réception d'informations.

Ces moyens d'émission et de réception sont chargés d'organiser les échanges d'informations entre les téléphones publics 10 et les serveurs PMS 20 via un dispositif mandataire 5 appelé encore serveur Medi@Proxy.

Le serveur Medi@Proxy ou dispositif mandataire 5 sert d'interface de communication entre les téléphones publics 10 et les serveurs PMS 20.

Un dispositif formant routeur 25 est disposé entre le réseau 2 et le serveur mandataire 5.

Les différents dispositifs, notamment le serveur Medi@Proxy 5, les serveurs PMS 5, le routeur 25, ainsi que les téléphones publics 10 sont équipés de protocoles de communication de type TCP/IP conformes aux recommandations techniques de l'IETF (Internet Engineering Task Force).

En pratique, un terminal 10 appelle un serveur PMS 20 pour remonter des données (alarmes, transactions...) par le biais de sessions dédiées (appel journalier, appel pour alarme, appel pour initialisation ou mise en service) selon un format choisi, par exemple selon le protocole de transfert de données PFSP.

La session de connexion comprend une demande de service correspondant par exemple à une demande d'initialisation.

Cette demande de service est accompagnée de données de type identification, par exemple le numéro d'appel du terminal et le certificat ESN associé à la carte électronique équipant ledit terminal, garantissant ainsi l'unicité du terminal.

De son côté, le serveur Medi@Proxy 5 vérifie ces données du terminal.

La vérification porte ensuite sur le fait de savoir si le terminal 10 en connexion est un nouvel équipement, déclaré au préalable ou non, avec possibilité d'initialisation générale ou partielle.

S'il s'agit d'un nouvel équipement, c'est-à-dire inconnu des tables du serveur PMS, ou déclaré comme tel, alors un certificat ESN (Electronic Serial Number) est généré par le serveur PMS.

Ce certificat ESN est unique pour le terminal en connexion. Il est associé au numéro d'appel du terminal.

De préférence, le certificat ESN est un numéro aléatoire, par exemple codé sur huit octets.

Le serveur PMS 20 stocke le certificat ESN ainsi engendré dans une table en correspondance avec le numéro d'appels associé.

Ensuite, le serveur PMS 20 transmet le certificat ESN ainsi généré, au terminal 10, via le cas le serveur Medi@Proxy 5.

De son côté, le terminal 10 reçoit le certificat ESN et le stocke dans une mémoire appropriée, par exemple une mémoire de type flash.

Ce certificat permet ainsi d'individualiser de manière unique une initialisation d'un terminal, ce qui empêche les doublons au niveau des tables du serveur PMS.

Pour répondre au besoin de décentralisation des opérateurs et parer aux limites physiques des serveurs (puissance , mémoire, espace disque...), plusieurs serveurs de supervision de gestion PMS 20 sont prévus et répartis dans une zone géographique choisie (répartition de charges).

En revanche, afin de favoriser la maintenance des téléphones publics et leur installation, les appels ou demandes de connexion des téléphones publics sont centralisés et dirigés vers un seul dispositif formant serveur mandataire 5.

La centralisation des connexions vers un seul dispositif serveur mandataire conjuguée à la décentralisation de l'affectation des appels à destination de plusieurs serveurs PMS, engendrent parfois un aiguillage incorrect des données.

Pour y remédier, le ou les dispositifs formant mandataire ou Medi@Proxy 5 comprennent une table de routage TR qui est sollicitée à la suite d'une demande de connexion (initialisation) de la part d'un terminal 10 et avant la connexion vers un serveur de supervision PMS 20.

La table de routage TR comprend notamment les éléments suivants :
- une désignation choisie de l'appareil de service, ici le numéro d'appel dans le cas de téléphone public. Ce numéro d'appel est extrait des tables des serveurs PMS 20 ;
- un certificat ESN, extrait également des tables des serveurs PMS 20 ; et
- une adresse du serveur de supervision PMS 20 configurée te stockée dans la table de routage du dispositif mandataire 5.

Lorsqu'un terminal 10 est connecté au dispositif mandataire 5, ledit dispositif mandataire 5 recherche le serveur PMS 20 qui utilise les éléments numéro d'appel et ESN.

Si le serveur PMS 20 apte à gérer l'appareil peut être trouvé dans la table de routage, une connexion est établie entre le terminal 10 et le serveur PMS 20 ainsi identifié.

En l'absence d'information concernant le serveur PMS chargé du terminal 10 en connexion, il est prévu de mettre en place une recherche de type recherche SQL afin de trouver dans une base de données des serveurs PMS un serveur PMS 20 apte à gérer le terminal 10 en connexion (par création au préalable d'une fiche contenant elle-même le numéro d'appel).

Le dispositif mandataire 5 interroge alors tour à tour les différents serveurs PMS. Si dans un serveur PMS 20 le téléphone public est déjà répertorié dans une base de données, alors les informations correspondantes du terminal, ici les informations numéro d'appels et ESN, ainsi que l'adresse du serveur PMS sont stockées dans la table de routage TR pour un usage ultérieur, c'est-à-dire pour la prochaine demande de connexion du terminal (appel pour alarme, appel journalier...). Et le serveur connecte le téléphone au serveur pour transfert des données dans la base.

Si aucune information concernant le terminal n'est trouvée dans aucune base de données et si aucun serveur PMS ne peut gérer l'appel du terminal, une procédure d'affectation est mise en place.

Par exemple, la procédure ou politique d'affectation prévoit l'établissement d'une connexion avec un serveur PMS spécifique désigné par défaut.

En variante, la procédure d'affectation prévoit une connexion avec un serveur PMS appartenant à un groupe de serveurs PMS prédéterminé.

Dans encore une autre variante, la procédure d'affectation comprend une procédure d'alerte dans laquelle un message de refus de connexion est adressé au terminal demandeur.

Une boîte de dialogue permet de déclarer et d'afficher au niveau du dispositif serveur mandataire les serveurs PMS disponibles et d'y configurer également la procédure d'affectation ainsi que la procédure d'alerte.

Par exemple, chaque adresse URL de chaque serveur de supervision PMS est indiquée en correspondance avec le nom dudit serveur. L'adresse peut être ainsi utilisée par la table de routage pour établir la connexion avec le serveur. La table de configuration comprend en outre des indications relatives au serveur PMS désigné par défaut.

Le cas échéant, la table de configuration comprend en outre les indications relatives au groupe de serveurs PMS susceptibles de traiter la demande de connexion, selon un ordre choisi jusqu'à ce qu'un serveur PMS traire correctement la demande de connexion.

La procédure d'affectation et/ou alerte peut être affichée au niveau du serveur mandataire avec une méthode d'affichage de type interface graphique.

Par exemple, une fenêtre s'affiche au niveau de la table de routage pour chaque serveur de supervision PMS 20.

La table de routage TR peut comprendre une pluralité de tables, notamment une table relative aux serveurs PMS, une table d'accord et une table de configuration.

Ainsi, le routage selon l'invention permet de répartir la charge selon plusieurs critères dans une solution décentralisée des serveurs PMS.

Le routage est applicable à tout système de supervision. La gestion centralisée des appels publiphones et le routage est réalisé ici en temps réel vers un serveur PMS sans impact sur le terminal public lui-même.

Le mécanisme de recherche du serveur PMS destinataire est mis en oeuvre soit selon une base locale (c'est-à-dire à partir d'une adresse d'un serveur PMS stockée en mémoire cache de la table de routage), soit selon une affectation par défaut, soit selon une affectation programmée (aléatoire, toujours le même ou une file tournante).

De plus, la table de routage a l'avantage d'être entretenue régulièrement et/ou enrichie dynamiquement au gré des connexions.

De plus, le procédé de routage est ici transparent par rapport au mode actuel d'utilisation du couple terminal/serveur PMS.

En pratique, le mécanisme de routage se met en route en réponse à une demande d'utilisation du couple terminal/serveur PMS.

En pratique, le mécanisme de routage se met en route en réponse à une demande d'initialisation d'un terminal 10.

Le mécanisme de routage permet, en mémorisant les données collectées au fil de l'eau, d'accélérer le routage des appels ultérieurs.

De plus, le mécanisme de routage garantit ici un routage unique et sans erreur grâce aux couples de données numéro d'appel, ESN identifiant un terminal et la connexion avec un serveur PMS.

## Revendications

1. Procédé de routage des appels d'au moins un appareil (10), du type délivrant des biens et des services tel qu'un téléphone public, relié à au moins un dispositif serveur de gestion (20) via au moins un dispositif mandataire (5) à travers un réseau de communication (2), ledit procédé de routage étant mis en oeuvre au sein du dispositif mandataire (5), **caractérisé en ce qu'**il comprend les étapes suivantes :
- réception par le serveur mandataire d'une demande de connexion d'un appareil, ladite demande comportant des données d'identification dudit appareil, tels qu'un certificat ESN et un numéro d'appel dans le cas d'un téléphone public;
- contrôle des données d'identification de l'appareil et en cas d'identification réussie dudit appareil, vérification dans une table de routage, de l'existence d'un serveur de gestion (20) associé audit appareil (10);
- si la table de routage indique un serveur de gestion associé audit appareil (10) alors le dispositif mandataire (5) opère le transfert de l'appel vers ledit serveur de gestion (20);
- et si la table ne comporte aucun serveur de gestion associé audit appareil (10) alors ledit dispositif mandataire affecte audit appareil (10) un serveur de gestion (20), transfère l'appel vers ledit serveur de gestion et met à jour la table de routage.

2. Procédé de routage selon la revendication 1, **caractérisé en ce que** ledit dispositif mandataire (5) affecte un serveur de gestion à un appareil (10) de la façon suivante :
- consultation des serveurs de gestion (20), à tour de rôle, pour vérifier qu'ils ne connaissent déjà pas ledit appareil (10) dans leurs bases de données;
- si effectivement l'un des serveurs de gestion (20) connaît ledit appareil alors ledit serveur mandataire choisit arbitrairement un serveur de gestion selon une règle prédéterminée, lui transmet l'appel et met à jour sa table de routage.

3. Procédé selon la revendication 1, **caractérisé en ce qu'**en cas de non identification de l'appareil, la demande de connexion est refusée.

4. Procédé selon la revendication 2, **caractérisé en ce que** ladite règle prédéterminée consiste à affecter l'appareil (10) avec l'un des serveurs de gestion (20) selon un mode d'allocation tournante.

5. Procédé selon la revendication 2, **caractérisé en ce que** ladite règle prédéterminée consiste à affecter l'appareil (10) avec l'un des serveurs de gestion (20) en fonction des données d'identification dudit appareil (10).

6. Dispositif de routage des appels d'au moins un appareil (10), du type délivrant des biens et des services tel qu'un téléphone public, relié à au moins un dispositif serveur de gestion (20) via au moins un dispositif mandataire (5) à travers un réseau de communication (2), **caractérisé en ce qu'**il comprend un dispositif mandataire disposant de moyens pour réceptionner une demande de connexion d'un téléphone public à un serveur de gestion, ladite demande comportant des données d'identification dudit appareil tels qu'un certificat ESN et un numéro d'appel dans le cas d'un téléphone public, de premiers moyens pour contrôler à partir desdites données d'identification l'identité de l'appareil, de second moyens pour contrôler dans une table de routage l'existence d'un serveur de gestion (20) associé audit appareil (10), de moyens pour transférer l'appel de connexion audit serveur de gestion (20), de moyens pour consulter les serveurs de gestion et vérifier si l'un d'entre eux connaît ledit appareil (10), de moyens de mise à jour de ladite table de routage et de moyens d'attribution d'un serveur de gestion selon une règle prédéterminée.

7. Programme d'ordinateur stocké sur un support d'information, le programme comportant des instructions permettant la mise en oeuvre du procédé de routage selon l'une des revendications 1 à 5, lorsque ce programme est chargé et exécuté par un système informatique.

8. Support d'information lisible par un système informatique, éventuellement ou totalement ou partiellement amovible, notamment CD-ROM ou support magnétique, tel qu'un disque dur ou une disquette, ou support transmissible, tel un signal électrique ou optique, le support d'information comportant des instructions d'un programme d'ordinateur permettant la mise en oeuvre du procédé de routage selon l'une des revendications 1 à 5, lorsque ce programme est chargé et exécuté par un système informatique.
